(19) Europäisches Patentamt
European Patent Office
Office européen des brevets

(11) EP 3 441 363 A1

(12) EUROPÄISCHE PATENTANMELDUNG

(43) Veröffentlichungstag:
**13.02.2019 Patentblatt 2019/07**

(51) Int Cl.:
***C01G 41/04*** *(2006.01)*

(21) Anmeldenummer: **17185151.2**

(22) Anmeldetag: **07.08.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **UMICORE AG & CO. KG**
**63457 Hanau-Wolfgang (DE)**

(72) Erfinder:
- **SUNDERMEYER, Joerg**
  **35041 Marburg (DE)**
- **HAMEL, Lisa**
  **35096 Weimar (DE)**
- **RAMON MUELLER, Ruben**
  **61130 Nidderau (DE)**
- **RIVAS NASS, Andreas**
  **64625 Bensheim (DE)**
- **WOERNER, Eileen**
  **61130 Nidderau (DE)**
- **DOPPIU, Angelino**
  **63500 Seligenstadt (DE)**
- **KARCH, Ralf**
  **63801 Kleinostheim (DE)**

# (54) VERFAHREN ZUR REDUKTION VON METALLHALOGENIDEN

(57) Gegenstand der Erfindung ist ein Verfahren zur Herstellung einer Verbindung der Formel $MX_n$ aus einer Vorläuferverbindung der Formel $MX_m$, wobei
M ein Metall ist,
X ein Halogenid ist, ausgewählt ist aus F, Cl, Br und I,
m ausgewählt ist aus einer Zahl von 2 bis 8, und
n ausgewählt ist aus einer Zahl von 1 bis 7, mit der Maßgabe, dass n < m ist, umfassend einen Verfahrensschritt, bei dem die Vorläuferverbindung mit einem Alken zu der Verbindung der Formel $MX_n$ reduziert wird,
wobei das Metallhalogenid der Formel $MX_n$ nach der Reduktion durch Sublimation gereinigt wird.

EP 3 441 363 A1

**Beschreibung**

Die Erfindung betrifft ein Verfahren zur Herstellung eines Metallhalogenids aus einer Vorläuferverbindung, die ebenfalls ein Metallhalogenid ist, umfassend einen Verfahrensschritt, bei dem die Vorläuferverbindung mit einem Alken reduziert wird.

Stand der Technik

In der anorganischen und organometallischen Chemie besteht ein kontinuierlicher Bedarf nach Metallhalogeniden in verschiedenen Oxidationsstufen. Dabei ist es im Allgemeinen schwierig, ein Metallhalogenid in einer konkreten Oxidationsstufe bereitzustellen, wenn analoge Metallhalogenide sowohl höherer als auch niedrigerer Oxidationsstufe existieren. Dies ist insbesondere problematisch, wenn die analogen Metallhalogenide relative stabil sind. Die präparativen Schwierigkeiten bestehen dann darin, dass zum einen eine effektive Reduktion zu einem Metallhalogenid mit geringerer Oxidationsstufe stattfinden muss, zum anderen aber die unerwünschte Folgereaktion zu dem Metallhalogenid mit noch niedrigerer Oxidationsstufe, oder auch zu dem elementaren Metall, verhindert werden muss. Solche Reaktionen sind daher nur erfolgreich, wenn ein selektives Reduktionsmittel zur Verfügung steht. Auch ist oft eine sorgfältige Einstellung und Kontrolle der Verfahrensbedingungen erforderlich. Allgemein ist es aus diesem Grund oft schwierig, ein solches Metallhalogenid in hoher Ausbeute und Reinheit herzustellen.

Ein weiteres Problem besteht darin, dass viele Metallhalogenide in höheren Oxidationsstufen eine geringe Stabilität aufweisen. Beispielsweise können derartige Reduktionsreaktionen nicht bei einer notwendigen hohen Reaktionstemperatur durchgeführt werden, wenn das Produkt oder das Edukt thermisch instabil ist.

Eine weitere Schwierigkeit besteht darin, dass die Trennung verschiedener Metallhalogenide desselben Metalls oft nicht einfach ist. Daher wird bei solchen Reaktionen oft keine hohe Endausbeute eines gereinigten Produktes erhalten, obwohl die Ausbeute der eigentlichen Reduktion relativ hoch ist. Solche Reaktionen sind nur dann zur großtechnischen Produktion geeignet, wenn auch Verfahren zur Aufreinigung der durch Reduktion erhaltenen Metallhalogenide zur Verfügung stehen.

Insgesamt ist also wegen unerwünschten Folgereaktionen, Stabilitätsproblemen und Aufreinigungsproblemen schwierig, durch solche gezielten Reduktionsreaktionen ein gewünschtes Metallhalogenid in hoher Ausbeute herzustellen.

Ein Beispiel für eine Verbindung, die durch eine solche gezielte Reduktion hergestellt werden kann, ist Wolframpentachlorid ($WCl_5$, Wolfram(V)-chlorid). Dieser sublimierbare Feststoff weist eine geringe Stabilität auf und zersetzt sich beispielsweise schnell in Gegenwart von Wasser. Gemäß dem Stand der Technik erfolgt die Herstellung üblicherweise durch Reduktion von Wolframhexachlorid ($WCl_6$, Wolfram(VI)-chlorid). Dabei wurden verschiedene Reduktionsmittel vorgeschlagen, um unerwünschte Folgereaktionen zu niedrigwertigen Wolframhalogeniden zu verhindern. So wurden im Stand der Technik verschiedene Verfahren zur Reduktion von Wolframhexachlorid beschrieben, die als Reduktionsmittel Wasserstoff, roten Phosphor, Aluminium, Magnesium oder Zinnchlorid nutzen. Diese Verfahren sind im Allgemeinen verbesserungsbedürftig, weil Wolframpentachlorid nicht in hoher Ausbeute erhalten wird, und dabei auch die Abtrennung aus dem Reaktionsgemisch problematisch ist. Nachteilig ist auch, dass solche Reaktionen im Allgemeinen bei hohen Temperaturen durchgeführt werden, was die Ausbeute und Produktqualität verringert. Ein weiterer Nachteil ist, dass viele dieser Verfahren ein weiteres Metall in den Reaktionsansatz einführen, was weitere Probleme bei der Aufreinigung mit sich bringt. Die Verfahren sind daher für präparative Anwendungen im industriellen Maßstab ungeeignet.

Im Stand der Technik wurde außerdem vorgeschlagen, Wolframhexachlorid mit chlorierten Olefinen zu reduzieren. McCann et al. (Inorganic Synthesis, XIII, 1972, Verleger: F. A. Cotton, McGraw-Hill, Inc.) beschreiben eine selektive Reaktion mit Tetrachlorethylen. Die Reaktion wird bei 100°C innerhalb von 24 Stunden durchgeführt. Die Ausbeute soll bei >90% liegen. Das Verfahren ist relativ energieintensiv, da es neben der relativ hohen Reaktionstemperatur auch eine starke Lichteinstrahlung erfordert. Dabei ist die präzise Einstellung der Reaktionsbedingungen hinsichtlich Reaktionsdauer und Lichtintensität erforderlich, um die Bildung von Nebenprodukten zu verhindern. Die Reaktion ist daher noch verbesserungsbedürftig und für Anwendungen im großen Maßstab nur wenig geeignet.

Ein weiteres Verfahren zur Reduktion von Wolframhexachlorid mit Olefinen wurde von Thorn-Csanyi, 1991, beschrieben (Thorn-Csanyi et al., Journal of Molecular Catalysis, Nr. 65, 1991, Seiten 261 bis 267). Als Reduktionsmittel werden 2-Penten und Cyclopenten eingesetzt. Allerdings wurde die Ausbeute nicht quantifiziert, sondern es wurde lediglich mittels UV-VIS-Spektroskopie die Bildung von Wolframpentachlorid verfolgt. Die Autoren geben an, dass - gemäß UV-VIS-Spektroskopie - das Wolframpentachlorid quantitativ gebildet würde. Im Rahmen der vorliegenden Anmeldung wurden Versuche durchgeführt, um diese Angaben zu überprüfen. Dabei wurde festgestellt, dass die Reaktion nicht quantitativ verläuft, sondern dass in der Praxis Ausbeuten von etwa 50 bis 80% erhalten werden (siehe Ausführungsbeispiele). Es wird also tatsächlich ein krudes Gemisch erhalten, das zahlreiche Nebenprodukte enthält. Die Abtrennung von instabilem Wolframpentachlorid aus einem solchen kruden Reaktionsansatz, der weitere, ähnliche

Wolframhalogenide, wie Wolframhexachlorid und Wolframtetrachlorid, und zudem verschiedene chlorierte Alkylverbindungen enthält, ist nicht trivial. Vor allem ist problematisch, dass Wolframhalogenide nicht stabil sind und sich bei höherer Temperatur spontan zersetzen. Daher gibt es keinen Hinweis, dass das Verfahren in der Praxis zur Isolierung von Wolframpentachlorid geeignet ist, geschwiege denn in hoher Ausbeute oder Reinheit. Nachteilig ist auch, dass das Reduktionsmittel Penten in etwa 200fachem Überschuss eingesetzt wird.

Thorn-Csanyi, 1985, und Thorn-Csanyi, 1986, beschreiben die Metathese-Reaktion von Wolframhexachlorid und Tetramethylzinn in Gegenwart von Olefinen (Thorn-Csanyi et al., Journal of Molecular Catalysis, Nr. 28, 1985, Seiten 37 bis 48; Nr. 36, 1986, Seiten 31 bis 38). Dabei wird unter anderem durch UV-VIS-Spektroskopie in dem kruden Reaktionsgemisch der Verlauf der Bildung von Wolframpentachlorid untersucht. Die Autoren beschreiben, dass sich zunächst Wolframpentachlorid bildet, wonach in Folgereaktionen weitere, nicht definierte Reaktionsprodukte entstehen. Verfahren zur Herstellung und Isolierung von Metallhalogeniden mit Olefinen werden nicht offenbart.

Es besteht ein Bedarf nach Verfahren, welche die oben genannten Nachteile überwinden. Es besteht ein allgemeiner Bedarf nach verbesserten Verfahren zur Herstellung und Isolierung von hochreinen Metallhalogeniden.

## Aufgabe der Erfindung

Der Erfindung liegt die Aufgabe zugrunde, Verfahren bereitzustellen, welche die oben beschriebenen Nachteile überwinden. Dabei soll ein möglichst einfaches und effizientes Verfahren zur Herstellung von Metallhalogeniden bereitgestellt werden. Das Verfahren soll insbesondere die effiziente Herstellung und Isolierung von Metallhalogeniden in hoher Reinheit und Ausbeute ermöglichen. Das Verfahren soll unter Verwendung einfach zugänglicher Ausgangsstoffe durchführbar sein, möglichst energieeffizient sein, und dabei insbesondere bei niedriger Temperatur durchführbar sein. Das Verfahren soll insbesondere geeignet sein, um hochreines Wolframpentachlorid herzustellen.

## Offenbarung der Erfindung

Überraschenderweise wird die der Erfindung zugrunde liegende Aufgabe gelöst durch Verfahren gemäß den Patentansprüchen.

Gegenstand der Erfindung ist ein Verfahren zur Herstellung einer Verbindung der Formel $MX_n$ aus einer Vorläuferverbindung der Formel $MX_m$, wobei

M ein Metall ist,
X ein Halogenid ist, ausgewählt ist aus F, Cl, Br und I,
m ausgewählt ist aus einer Zahl von 2 bis 8, und
n ausgewählt ist aus einer Zahl von 1 bis 7, mit der Maßgabe, dass $n < m$ ist, umfassend einen Verfahrensschritt, bei dem die Vorläuferverbindung mit einem Alken zu der Verbindung der Formel $MX_n$ reduziert wird,

wobei das Metallhalogenid der Formel $MX_n$ nach der Reduktion durch Sublimation gereinigt wird.

Das erfindungsgemäße Verfahren dient zur Herstellung eines Metallhalogenids aus einer Vorläuferverbindung, die ein analoges Metallhalogenid höherer Oxidationsstufe ist. Die Umsetzung erfolgt durch eine Reduktionsreaktion, die nachfolgend auch vereinfacht als "die Reaktion" bezeichnet wird.

Metallhalogenide der Formel $MX_m$ können mit Alkenen als Reduktionsmittel erfindungsgemäß gezielt zu einem niedrigerwertigen Metallhalogenid der Formel $MX_n$ reduziert werden, ohne dass eine signifikante weitere Reduktion (Überreduktion) erfolgt, bei der das Produkt $MX_n$ weiter reduziert würde, beispielsweise zu einem Metallhalogenid mit noch niedrigerer Oxidationsstufe oder zu dem Metall selbst.

Das durch die Reduktion hergestellte Metallhalogenid der Formel $MX_n$ wird durch eine Sublimation gereinigt. Überraschenderweise wurde gefunden, dass Metallhalogenide durch Sublimation effizient von dem kruden Reaktionsprodukt der Reduktion abgetrennt werden können. Dabei kann das Metallhalogenid in hoher Ausbeute und hochreiner Form erhalten werden. Das war nicht zu erwarten, weil das krude Reaktionsprodukt zum einen weitere instabile Metallhalogenide in anderen Oxidationsstufen und halogenierte Kohlenwasserstoffe mit verschiedenen Siedepunkten erhalten kann. Zudem sind solche Metallhalogenide oft thermisch instabil, so dass unerwünschte Nebenreaktionen zu erwarten waren.

Nach Beendigung der Reduktion liegt das Reaktionsprodukt im Allgemeinen als ausgefällter Feststoff vor. Erfindungsgemäß ist es bevorzugt, dass der Feststoff aus dem Reaktionsansatz vor der Sublimation abgetrennt und gegebenenfalls vorgereinigt wird. Dabei werden bevorzugt flüchtigen Komponenten, wie Lösungsmittel und flüchtige Nebenprodukte, abgetrennt. Insbesondere werden dabei alle Komponenten abgetrennt, deren Siedepunkt unterhalb der Sublimationstemperatur liegt.

Der Feststoff kann mit üblichen Maßnahmen abgetrennt und vorgereinigt werden, wie Filtrieren, Waschen und Trocknen. Bevorzugt wird das Reaktionsprodukt zunächst filtriert. bevorzugt wird der Feststoff danach gewaschen.

Dabei kann mit dem Lösungsmittel und/oder mit anderen Lösungsmitteln, beispielsweise Pentan, gewaschen werden. Bevorzugt wird das Filtrat anschließend getrocknet, beispielsweise durch Destillation. Besonders geeignet ist eine Destillation im Vakuum, um hohe Temperaturen zu vermeiden. Es wird ein Feststoff erhalten, der einen relativ hohen Anteil des gewünschten Metallhalogenids aufweist.

Die Sublimation wird bevorzugt durchgeführt, ohne dass vorher ein weiterer Trennungsschritt erfolgt, bei dem andere nicht flüchtige Komponenten, wie andere Metallhalogenide, abgetrennt werden. Erfindungsgemäß wurde gefunden, dass ein hochreines Metallhalogenid in hoher Ausbeute erhalten werden kann, wenn im Wesentlichen eine Reduktionsreaktion mit einer Sublimation kombiniert wird. Dies war überraschend, weil es nicht zu erwarten war, dass auf diese relativ einfache Weise das Produkt aus solchen Gemische aus verschiedenen Metallhalogeniden und chlorierten Kohlenwasserstoffen gereinigt werden kann.

Das zu isolierende Metallhalogenid ist sublimierbar. Im Stand der Technik sind zahlreiche Halogenide, insbesondere von Metallen der Nebengruppen des Periodensystems, bekannt, die sublimieren. Die Neigung zur Sublimation nimmt oft bei niedrigem Druck zu. Die Sublimation wird bevorzugt bei niedrigem Druck durchgeführt. Dies ist auch von Vorteil, um unerwünschte Nebenreaktionen zu vermeiden, die oft bei hoher Temperatur stattfinden. Bevorzugt wird die Sublimation dabei im Vakuum durchgeführt. Die Temperatur wird oberhalb der Sublimationstemperatur des Produktes eingestellt. Die Sublimation wird bevorzugt bei einer Temperatur kleiner 250°C, insbesondere kleiner 200°C oder kleiner 180°C durchgeführt, beispielsweise zwischen 100°C und 250°C, oder zwischen 120°C und 200°C, oder zwischen 150°C und 180°C. Die Sublimation kann beispielsweise über einen Zeitraum von 1 h bis 24 h oder von 2 h bis 10 h durchgeführt werden.

Das Edukt wird durch die Formel $MX_m$ und das Produkt durch die Formel $MX_n$ beschrieben. Im Rahmen dieser Anmeldung stehen diese Formeln allgemein für Verbindungen, bei denen das molare Verhältnis von Metall zu Halogen 1 : m bzw. 1 : n ist. Die Formeln sind daher nicht einschränkend so zu verstehen, dass ein konkretes Molekül $MX_n$ oder $MX_m$ vorliegt. Die Verbindungen können vielmehr auch Dimere, Oligomere oder Polymere der angegebenen Stöchiometrie sein. Für viele Metallhalogenide ist auch nicht eindeutig, ob die Verbindung unter definierten Bedingungen beispielsweise als Monomer, Dimer oder Oligomer vorliegt. Somit bezeichnet die Formel $MX_n$ auch Verbindungen der Formeln $(MX_n)_a$ mit a = 2, 3, 4, 5 oder bis zu ∞. Somit können die Verbindungen der Formel $MX_m$ und $MX_n$ beispielsweise definierte Moleküle, Polymere, wie lineare oder vernetzte Polymere, oder Salze mit einer Kristallstruktur sein.

Die Zahlenwerte m und n geben die Anzahl der Halogenatome pro Metallatom an. Sie sind im Falle von Halogenverbindungen immer aus ganzen Zahlen ausgewählt. Dabei gibt der Wert m oder n gleichzeitig die Oxidationsstufe des Metalls in der Verbindung an.

Bei der Auswahl von m und n ist zu beachten, dass n < m ist, damit eine Reduktion bezeichnet wird. Die Reduktion kann dabei insbesondere zu einer Verringerung der Oxidationsstufe der Vorläuferverbindung um einen Wert von 1 bis 6 führen. Das bedeutet, dass m - n = 1 bis 6 ist. Bevorzugt ist eine Reaktion, bei der die Oxidationsstufe des Metalls um bis zu drei Oxidationsstufen erniedrigt wird, so dass m - n = 1, 2 oder 3 ist. Besonders bevorzugt ist eine Reaktion, bei der die Oxidationsstufe des Metalls um 1 oder 2 Oxidationsstufen erniedrigt wird (m - n = 1 oder 2). Insbesondere ist es bevorzugt, dass die Reduktionsstufe des Metalls genau um 1 erniedrigt wird (m - n = 1).

In einer bevorzugten Ausführungsform ist m = 4, 5 oder 6. In einer bevorzugten Ausführungsform ist n = 3, 4 oder 5. In einer bevorzugten Ausführungsform ist m = 4, 5 oder 6 und n = 3, 4 oder 5. Besonders bevorzugt ist m = 6 und n = 5. Solche höheren Oxidationsstufen sind bevorzugt, weil die entsprechenden Metallhalogenide $MX_3$, $MX_4$, $MX_5$ oder $MX_6$ oft verschiedene analoge Metallhalogenide mit anderen Wertigkeiten aufweisen. Daher ist es besonders vorteilhaft, dass solche Verbindungen erfindungsgemäß durch selektive Reduktion in konkrete Produkte mit einer definierten niedrigeren Oxidationsstufe umgesetzt werden können.

Mit dem erfindungsgemäßen Verfahren kann insbesondere verhindert werden, dass eine weitere Reaktion der Verbindung $MX_n$ zu einem Folgeprodukt mit niedrigerer Oxidationsstufe, die kleiner n ist, stattfindet, beispielsweise zu Halogeniden der Formel $MX_{n-1}$ oder $MX_{n-2}$.

Metalle, die mehrere Halogenide in verschiedenen Oxidationsstufen bilden können, finden sich insbesondere in den Nebengruppen des Periodensystems der Elemente, sowie bei den Metallen der dritten bis sechsten Hauptgruppe. In einer bevorzugten Ausführungsform ist das daher Metall M ausgewählt ist aus einem Übergangsmetall, einem Lanthanoid, einem Actinoid, In, Tl, Sn, Pb, Sb und Bi. Besonders bevorzugt ist das Metall ein Übergangsmetall. Dabei ist es insbesondere bevorzugt, dass die Verbindung $MX_m$ eine Oxidationsstufe von 3, 4, 5 oder 6, insbesondere von 5 oder 6, aufweist. Besonders bevorzugt ist das Metall ein solches der Nebengruppe 1, 4, 5, 6, 7 oder 8 des Periodensystems. Die Metalle dieser Nebengruppen sind insbesondere dafür bekannt, dass sie verschiedene Halogenide mit verschiedenen Oxidationsstufen bilden können. Insbesondere kann das Metall ausgewählt sein aus Ti, V, Nb, Ta, Cr, Mo, W, Mn, Tc, Re, Fe, Ru, Os, Cu und Au. Ganz besonders bevorzugt ist das Metall ein Metall der sechsten Nebengruppe, insbesondere Wolfram. Es wurde gefunden, dass das Verfahren besonders effizient mit Wolframhalogeniden durchführbar ist.

Das Halogenid ist ausgewählt aus F, Cl, Br und I. Bevorzugt weisen die Verbindungen $MX_n$ und $MX_m$ dabei nur ein einziges Halogenid auf. Besonders bevorzugt ist das Halogenid X = Cl, Br oder I, insbesondere Cl oder Br. In einer bevorzugten Ausführungsform ist X = Cl. Metallchloride sind im Allgemeinen einfacher verfügbar und handhabbar

als andere Halogenide und werden aus diesem Grund in der organischen Synthese und organometallischen Chemie häufig als Grundstoffe eingesetzt.

In einer bevorzugten Ausführungsform dient das Verfahren zur Herstellung von $WCl_5$ aus $WCl_6$. Es wurde gefunden, dass $WCl_5$ mit dem erfindungsgemäßen Verfahren in besonders hoher Ausbeute und Reinheit erhalten werden kann.

Das Verfahren umfasst einen Verfahrensschritt, bei dem die Vorläuferverbindung mit einem Alken zu dem gewünschten Metallhalogenid reduziert wird. Das Alken wirkt als Reduktionsmittel und reduziert die Vorläuferverbindung. Die Reduktion wird in einem Reaktionsansatz durchgeführt, der die Vorläuferverbindung, das Alken und gegebenenfalls ein Lösungsmittel enthält.

Erfindungsgemäß ist es auch möglich, Gemische der einzelnen Komponenten einzusetzen, beispielsweise zwei oder mehr verschiedene Alkene. Es ist jedoch bevorzugt, die Reaktion mit einem einzigen Alken und einer einzigen Vorläuferverbindung durchzuführen, da die Reaktion dann einfacher kontrolliert werden kann.

Alkene (Olefine) sind chemische Verbindungen aus der Gruppe der aliphatischen Kohlenwasserstoffe, die mindestens eine Kohlenstoff-Kohlenstoff-Doppelbindung im Molekül besitzen. Alkene bestehen aus den Elementen Kohlenstoff und Wasserstoff. Bevorzugt weist das Alken nur eine einzige Doppelbindung auf. Sofern das Alken *cis*- und *trans*-Isomere aufweist, kann ein Isomer oder ein Isomerengemisch eingesetzt werden.

Das Alken kann ein lineares, verzweigtes oder cyklisches Alken sein. Bevorzugt weist das Alken 3 bis 10 Kohlenstoffatome auf, besonders bevorzugt 4 bis 8 Kohlenstoffatome. Das Alken kann dabei ausgewählt sein aus Buten, Penten, Hexen, Hepten oder Octen.

Bevorzugt ist das Alken ein Penten. Besonders bevorzugt ist das Penten ein lineares Penten oder Cyclopenten. Besonders bevorzugt ist ein lineares Penten, wie 2-Penten, 1-Penten oder 3-Penten. Dabei ist insbesondere 2-Penten bevorzugt. Es wurde gefunden, dass insbesondere mit 2-Penten sehr hohe Ausbeuten sowohl bei der Reduktion als auch bei der Sublimation aus dem Rohprodukt der Reduktion erhalten werden können.

In einer bevorzugten Ausführungsform wird die Reduktion in einem Lösungsmittel durchgeführt. Das Lösungsmittel ist bevorzugt ein organisches Lösungsmittel. Besonders bevorzugt enthält das Lösungsmittel Kohlenwasserstoffe oder besteht aus Kohlenwasserstoffen. Die Kohlenwasserstoffe können dabei aliphatische oder aromatische Kohlenwasserstoffe oder Gemische davon sein. In einer bevorzugten Ausführungsform sind die Kohlenwasserstoffe aromatische Kohlenwasserstoffe. Als aromatische Kohlenwasserstoffe sind übliche Lösungsmittel geeignet, wie substituiertes Benzol, insbesondere Toluol, Xylole, Ethylbenzol oder Cumol. Außerdem sind anellierte Arene geeignet, wie Naphthalin oder Anthracen.

Das Lösungsmittel wird allgemein so ausgewählt, dass es eine effiziente Reaktion ermöglicht. Es sollte dabei bevorzugt eine gute Mischbarkeit mit dem Alken aufweisen und eine einzige flüssige Phase bildet. Die Vorläuferverbindung wird in dem Lösungsmittel gelöst oder suspendiert.

Besonders bevorzugt wird als Lösungsmittel Toluol eingesetzt. Es wurde gefunden, dass die Reduktion in Toluol besonders effizient ist und mit besonders wenigen Nebenreaktionen verläuft.

In einer bevorzugten Ausführungsform ist das Verhältnis A: B der molaren Ausgangsmengen A der Vorläuferverbindung und B des Alkens so ausgewählt, dass es um nicht mehr als 50%, bevorzugt um nicht mehr als 20% oder um nicht mehr als 10% von dem idealen molaren Verhältnis für die Redoxreaktion abweicht. Das ideale molare Verhältnis ist das, bei dem die Redoxreaktion theoretisch vollständig ablaufen würde. Das ideale Verhältnis ist 1:1, wenn das Oxidationsmittel gleich viele Elektronen aufnimmt wie das Reduktionsmittel abgibt. Gegebenenfalls kann dabei ein geringfügiger Unterschuss des Reduktionsmittels vorteilhaft sein, um eine Weiterreduktion zu verhindern. Abhängig vom Oxidationspotential des zu reduzierenden Metallhalogenids kann dabei alternativ auch ein stöchiometrischer Überschuss des Reduktionsmittels von Vorteil sein, um eine möglichst hohe Ausbeute zu erhalten, insbesondere wenn das Edukt nicht $WCl_6$ ist.

Die Reaktion verläuft bevorzugt gemäß Reaktionsgleichung (I) oder (II):

$$2\,MX_m + R\text{-}CH{=}CH\text{-}R' = 2\,MX_{m-1} + R\text{-}CHX\text{-}CHX\text{-}R \qquad (I)$$

$$MX_m + R\text{-}CH{=}CH\text{-}R' = MX_{m-2} + R\text{-}CHX\text{-}CHX\text{-}R \qquad (II)$$

Bei Reaktionsgleichung (I) ist n = m-1 und bei Reaktionsgleichung (II) ist n = m-2. R und R' sind unabhängig voneinander ausgewählt aus H und Alkyl, bevorzugt mit 0 bis 8, insbesondere 0 bis 4 C-Atomen, wobei R und R' auch überbrückt sein können, so dass die Verbindung cyclisch ist.

Bevorzugt werden bei einer Reaktion der Gleichung (I) die Ausgangsstoffe $MX_m$ und R-CH=CH-R' in einem molaren Verhältnis von 2,4 : 1 bis 1,6 : 1 eingesetzt, insbesondere von 2,2 : 1 und 1,8 : 1.

Mit der erfindungsgemäßen Reduktion kann auch bei niedrigen Temperaturen eine hohe Ausbeute erreicht

werden. Dies ist sehr vorteilhaft, da Metallhalogenide der Formel $MX_n$ und $MX_m$, die in verschiedenen Oxidationsstufen vorkommen, oft thermisch instabil sind. Es ist insbesondere nicht erforderlich, das Reaktionsgemisch zu erwärmen. In einer bevorzugten Ausführungsform wird die Reduktion bei einer Temperatur <60°C, insbesondere <50°C, oder <40°C durchgeführt. In einer weiteren bevorzugten Ausführungsform wird die Reduktion bei einer Temperatur von 10°C bis 50°C durchgeführt. Die Reduktion wird besonders bevorzugt bei einer Temperatur von 15°C bis 40°C durchgeführt, insbesondere zwischen 20°C und 30°C, oder bei Raumtemperatur (25°C). Die Reaktion eignet sich daher insbesondere, wenn sich mindestens ein Edukt oder Produkt oberhalb 100°C, oder oberhalb 150°C, oder oberhalb 200°C zersetzt oder verflüchtigt. In einer weiteren bevorzugten Ausführungsform kann die Temperatur gegen Ende der Reaktion etwas erhöht werden. Dies kann vorteilhaft sein, um eine möglichst vollständige Umsetzung des Metallhalogenids zu erreichen. Beispielsweise kann die Reaktion zunächst wie oben angegeben ausgewählt werden, und im weiteren Verlauf um 10 bis 50°C erhöht werden.

Die Reduktion wird bevorzugt unter Sauerstoffausschluss durchgeführt, beispielsweise unter Inertgasatmosphäre, wobei als Inertgas bevorzugt Stickstoff eingesetzt wird. Die Reduktion erfolgt bevorzugt unter Rühren.

Die Reduktion kann als Batch-Verfahren oder kontinuierlich durchgeführt werden. Die Reduktion wird bevorzugt bei Normaldruck durchgeführt. Die Zuführung von Energie, beispielsweise in Form von Licht oder Strahlung, ist nicht erforderlich.

In einer bevorzugten Ausführungsform enthält das Reaktionsgemisch nur die Vorläuferverbindung, das Alken und gegebenenfalls das Lösungsmittel. Der Zusatz weiterer Hilfsstoffe, wie von Katalysatoren, ist nicht erforderlich. Insbesondere ist es nicht erforderlich, weitere Metalle oder Metallverbindungen hinzuzufügen, wie Aluminium, Zinn oder Verbindungen davon. Insgesamt ist also vorteilhaft, dass die Reaktion mit nur wenigen Ausgangsstoffen und unter sehr milden Bedingungen effizient durchführbar ist.

Die erfindungsgemäße Reaktion verläuft im Allgemeinen relativ schnell. Die Reaktion kann aber auch über einen längeren Zeitraum durchgeführt werden, um eine möglichst vollständige Umsetzung zu erreichen. Dies ist möglich, weil erfindungsgemäß die potentielle Folgereaktion zu einem niedrigerwertigen Metallhalogenid oder Metall nicht oder nur unwesentlich stattfindet. Die Reaktion mit Alkenen als Reduktionsmitteln kann somit auch über längere Zeiträume selektiv durchgeführt werden. Dies hat den Vorteil, dass die Reaktion nicht nach einer bestimmten Zeit unterbrochen werden muss, um eine weitere Reaktion zu verhindern. Bei der Reaktion können daher insgesamt hohe Ausbeuten erzielt werden. Die Durchführung ist einfach, weil die Reaktion nicht aufwendig eingestellt und kontrolliert werden muss, um ein Optimum für die Reaktionsausbeute zu erreichen. Auch aus diesem Grund ist das erfindungsgemäße Verfahren einfacher und effizienter als bekannte Verfahren.

Die Reduktionsreaktion kann über einen Zeitraum von mindestens 5 min, mindestens 10 min, mindestens 30 min, mindestens 1 h, mindestens 2 h oder mindestens 5 h durchgeführt werden. Dabei kann die Reaktionsdauer beispielsweise von 5 min bis zu 48 h, oder von 20 min bis zu 36 h betragen. Mit dem Zeitraum wird die Zeitspanne bezeichnet ab Beginn der Reduktionsreaktion, bis die Reaktion beendet wird.

In einer bevorzugten Ausführungsform wird die Reduktion für relativ kurze Zeit durchgeführt. Bevorzugt erfolgt die Reduktion dabei für weniger als 2 h oder weniger als 90 min. Die Reaktion kann beispielsweise in einem Zeitraum von 5 min bis 120 min, insbesondere von 10 min bis 90 min, erfolgen. Solche relativ kurze Reaktionszeiten können vorteilhaft sein, um eine hohe Ausbeute zu erreichen. Erfindungsgemäß wurde gefunden, dass die Ausbeute bei längeren Reaktionszeiten geringer sein kann, möglicherweise weil eine unerwünschte Überreduktion stattfindet. Durch kurze Reaktionszeiten der Reduktion kann auch das Verfahren insgesamt in vorteilhafter Weise beschleunigt werden.

Erfindungsgemäß wurde gefunden, dass eine besonders hohe Ausbeute erhalten wird, wenn Wolframhexachlorid mit einem linearen Penten, wie 2-Penten, zu Wolframpentachlorid reduziert wird. Wie die Ausführungsbeispiele zeigen, wird gerade bei dieser Kombination sowohl eine relativ hohe Ausbeute bei der Reduktion als auch bei der Sublimation erhalten. Dagegen zeigte sich bei der Reduktion von Wolframhexachlorid mit anderen Reduktionsmitteln, wie Cyclopenten oder Hexen, entweder eine geringe Ausbeute bei der Sublimation oder bei der Reduktion. Besonders bevorzugt ist das Verfahren daher ein solches zur Herstellung von $WCl_5$ aus $WCl_6$, umfassend einen Verfahrensschritt, bei dem $WCl_6$ mit einem linearen Penten, bevorzugt 2-Penten, zu $WCl_5$ reduziert wird, wobei das $WCl_5$ nach der Reduktion durch Sublimation gereinigt wird, wobei die Ausgangsstoffe in einem molaren Verhältnis von 2,2 : 1 und 1,8 : 1 eingesetzt werden, wobei die Reduktion über einen Zeitraum von weniger als 2 h durchgeführt wird.

Bevorzugt wird nach dieser Zeit das Metallhalogenid der Formel $MX_n$ in einer Ausbeute von >80%, bevorzugt >90% erhalten, bezogen auf das Metallhalogenid der Formel $MX_m$. Allgemein wurde gefunden, dass die Reaktion nach Vermischung der Edukte relativ schnell einsetzt, so dass keine besondere Aktivierungsenergie aufgewendet werden muss. Die Reaktionsgeschwindigkeit kann im weiteren Verlauf begrenzt sein, weil das Metallhalogenid schwerlöslich und damit nur eingeschränkt zugänglich sein kann.

In einer bevorzugten Ausführungsform wird die Vorläuferverbindung vorgelegt und danach das Alken kontinuierlich zugegeben. Dabei ist es bevorzugt, die Vorläuferverbindung zunächst in Lösungsmittel zu lösen oder zu suspendieren. Beispielsweise kann die Zugabe des Alkens über einen Zeitraum von 5 min bis 2 h erfolgen, insbesondere von 10 min bis 90 min. In einer weiteren Ausführungsform kann das Alken auch auf einmal, also nicht kontinuierlich, zugegeben

werden.

Es ist ein Vorteil der Reduktionsreaktion, dass sie in einem Schritt erfolgt. Es ist nicht erforderlich, während der Reduktion weitere Schritte durchzuführen, zum Beispiel weitere Verbindungen hinzuzufügen. Es ist auch nicht erforderlich, die Reaktion nach einer definierten Zeit abzubrechen.

Bevorzugt wird das Verfahren im großtechnischen und industriellen Maßstab durchgeführt. In einer bevorzugten Ausführungsform wird das Verfahren mit einer Ausgangsmenge der Vorläuferverbindung $MX_m$ durchgeführt, die > 5 kg, > 10 kg, > 15 kg oder > 50 kg ist. Beispielsweise kann die Menge der Vorläuferverbindung zwischen 5 kg und 500 kg, insbesondere zwischen 10 kg und 100 kg liegen.

In einer bevorzugten Ausführungsform wird das Metallhalogenid der Formel $MX_n$ nach der Sublimation in einer Ausbeute von >80%, bevorzugt >85% oder >90%, besonders bevorzugt >93% oder >95% erhalten, bezogen auf die vor der Reduktion eingesetzte molare Menge der Vorläuferverbindung.

Bevorzugt wird das gewünschte Metallhalogenid nach der Sublimation in einer Reinheit von > 98 Gew.-%, insbesondere > 99,5 Gew.-%, oder besonders bevorzugt >99,9 Gew.% erhalten. Bevorzugt ist der Anteil an Verunreinigungen <500 ppb, oder sogar <100 ppb (gemessen durch Massenspektrometrie mit induktiv gekoppeltem Plasma; ICP-MS).

Es ist ein weiterer Vorteil des Verfahrens, dass nach der Sublimation nur wenig Sublimationsrückstand verbleibt. So wurde beispielsweise gefunden, dass nach der Sublimation weniger als 1 % fester Rückstand verbleibt, wenn 2-Penten als Reduktionsmittel eingesetzt wurde . Bevorzugt verbleibt bei der Sublimation weniger als 3%, insbesondere weniger als 1% fester Rückstand.

Gegenstand der Erfindung ist auch eine Zusammensetzung, die gemäß dem erfindungsgemäßen Verfahren erhältlich ist. Die Zusammensetzung ist ein hochreines Metallhalogenid, das nur Spuren von Verunreinigungen aufweist. Die Zusammensetzung ist unter anderem durch die Abwesenheit detektierbarer Verunreinigungen anderer Metalle charakterisiert, weil das Verfahren ohne Zusatz weiterer Metalle oder Metallverbindungen durchgeführt werden kann. Dies ist bei hochsensiblen Folgeprozessen wie der Halbleiterherstellung vorteilhaft, bei denen Verunreinigungen unbedingt zu vermeiden sind. Hochreine Metallhalogenide werden insbesondere für Reaktionen in der Gasphase eingesetzt, bei denen das Metall oder eine Metallverbindung auf einem Substrat abgeschieden wird. Ein solcher Prozess ist insbesondere CVD (chemical vapor deposition), und dabei insbesondere ALD (atomic layer deposition) oder MOCVD (metallorganische chemische Gasphasenabscheidung). Da die erfindungsgemäße Zusammensetzung das gewünschte Metallhalogenids in sehr hoher Reinheit enthält, kann sie unmittelbar als Quelle für das Metallhalogenid für solche Reaktionen in der Gasphase eingesetzt werden. Dabei kann das Metallhalogenid durch Sublimation aus der Zusammensetzung abgetrennt und direkt der Reaktion in der Gasphase zugeführt wird.

Die erfindungsgemäßen Verfahren und die Verwendungen lösen die der Erfindung zugrunde liegende Aufgabe. Es wird ein einfaches und effizientes Verfahren bereitgestellt, um hochreine Metallhalogenide in hoher Ausbeute bereitzustellen. Dabei sind nur wenige einfache Arbeitsschritte erforderlich, um ein Produkt zu erhalten, das nahezu frei von Verunreinigungen ist. Mit Alkenen als Reduktionsmitteln erfolgt die Reduktion einer Vorläuferverbindung der Formel $MX_m$ selektiv zu einem gewünschten Metallhalogenid, ohne dass eine wesentliche unerwünschte Folgereaktion zu Metallhalogeniden mit niedrigeren Oxidationsstufen stattfindet. Insgesamt ist das erfindungsgemäße Verfahren einfach und effizient, weil es unter milden Bedingungen durchgeführt werden kann und nur wenige Komponenten erfordert.

## Ausführungsbeispiele

### Chemikalien

Die eingesetzten Chemikalien der Beispiele 1 bis 3 sind in der Tabelle 1 zusammengefasst.

Tabelle 1: eingesetzte Chemikalien der Beispiele 1 bis 3

| **Verbindung** | **Summenformel** | **CAS-Nr.** | **Anmerkung** | **Molmasse g/mol** |
|---|---|---|---|---|
| Wolframhexachlorid | $WCl_6$ | 13283-01-7 | Reinheit 99,9 %, Lagerung im Handschuhkasten | 396,61 |
| Cyclopenten | $C_5H_8$ | 142-29-0 | Destilliert, Lagerung über Molekularsieb 4 Å | 66,10 |
| 2-Penten (*cis/trans*-Isomerengemisch) | $C_5H_{10}$ | 109-68-2 | Destilliert, Lagerung über Molekularsieb 4 Å | 70,13 |
| 1-Hexen | $C_6H_{12}$ | 592-41-6 | Lagerung über Molekularsieb 4 Å | 84,16 |

(fortgesetzt)

| **Verbindung** | **Summenformel** | **CAS-Nr.** | **Anmerkung** | **Molmasse g/mol** |
|---|---|---|---|---|
| Toluol | $C_7H_8$ | 108-88-3 | wasserfrei, destilliert über Na/ Benzophenon, Lagerung über Molsieb 4Å und $Al_2O_3$ | 92,14 |
| Pentan | $C_5H_{12}$ | | wasserfrei | 72,15 |
| Wolframpentachlorid | $WCl_5$ | 13470-14-9 | Reaktionsprodukt | 43,67 |

Thermogravimetrie (TGA) mit simultaner Differenz-Thermoanalyse (SDTA)

Die thermogravimetrischen Analysen (TGA), sowie die Einwaagen dafür, erfolgten unter Stickstoffatmosphäre in einem Handschuhkasten mit einem Gerät der Marke TGA 3+ (Hersteller: Mettler Toledo; Auswertung mit Software der Marke Star$^e$). Für die Messung wurden ca. 6-12 mg einer Probe in einem Aluminiumoxid-Tiegel gewogen. Als Ergebnisse wurden die TGA (Masseverlust) sowie SDTA-Kurven (Wärmestrom) erhalten. Aus der TGA-Kurve wurde jeweils noch die erste Ableitung (DTG-Kurve, Geschwindigkeit der Massenänderung) gebildet. Die Aufheizrate betrug 10 K/min oder 20 K/min.

Beispiel 1

Wolframhexachlorid wurde mit 2-Penten gemäß der folgenden Reaktionsgleichung zu Wolframpentachlorid reduziert. Dabei wurden Chemikalien und Stoffmengen eingesetzt wie in Tabelle 2 angegeben. Die Reaktionszeit betrug 24h.

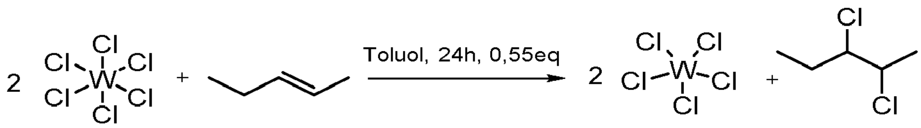


Tabelle 2: Chemikalien und Stoffmengen gemäß Beispiel 1

| Chemikalie | Einwaage (g) | Volumen (mL) | Stoffmenge (mmol) | Äquivalente (eq) |
|---|---|---|---|---|
| $WCl_6$ | 4,496 | - | 11,335 | 1,00 |
| 2-Penten | 0,437 | - | 6,234 | 0,55 |
| Toluol | - | 25 | - | - |

In einen ausgeheizten und unter Stickstoff gestellten 250 mL Schlenkkolben wurde $WCl_6$ in einem Handschuhkasten (Glovebox) eingewogen. Außerhalb des Handschuhkastens wurden Toluol und anschließend das Olefin unter $N_2$-Strom zugegeben und der Kolben fest verschlossen. Es wurde bei Raumtemperatur gerührt.

Der entstandene Feststoff wurde anschließend durch eine Umkehrfritte (G4, ca. 10-16 μm Porendurchmesser) unter Stickstoff filtriert und nochmals mit trockenem Toluol (2x mit 10 mL) und danach mit trockenem n-Pentan (2x mit 10 mL) gespült. Anschließend wurde mehrere Stunden bei Raumtemperatur und Feinvakuum ($10^{-3}$ mbar) getrocknet. Die Aufbewahrung erfolgte unter Stickstoffatmosphäre im Handschuhkasten.

Etwa die Hälfte des Produkts wurde in eine Sublimationsapparatur gewogen und ca. 5 h bei 160°C Ölbadtemperatur im Feinvakuum ($10^{-3}$mbar) sublimiert. Es bildeten sich am Kühlfinger violette Kristalle.

Beispiel 2

Wolframhexachlorid wurde gemäß der Reaktionsgleichung unten mit 2-Penten zu Wolframpentachlorid reduziert. Die Reaktion erfolgte wie in Beispiel 1 beschrieben mit folgenden Abwandlungen: Die Stoffmengen wurden gemäß Tabelle 3 eingesetzt. Die Reaktionszeit betrug 30 min.

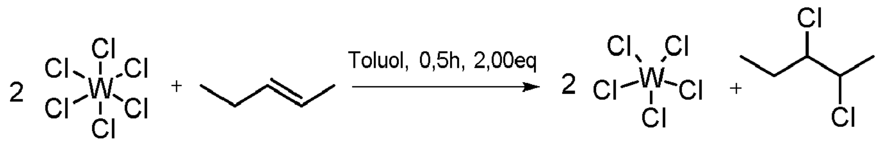


Tabelle 3: Chemikalien und Stoffmengen gemäß Beispiel 2

| Chemikalie | Einwaage (g) | Volumen (mL) | Stoffmenge (mmol) | Äquivalente (eq) |
|---|---|---|---|---|
| $WCl_6$ | 4,476 | - | 11,287 | 1,00 |
| 2-Penten | 1,583 | - | 22,574 | 2,00 |
| Toluol | - | 25 | - | - |

Beispiel 3

Wolframhexachlorid wurde gemäß der Reaktionsgleichung unten mit Cyclopenten zu Wolframpentachlorid reduziert. Die Reaktion erfolgte wie in Beispiel 1 beschrieben mit folgenden Abwandlungen: Die Stoffmengen wurden gemäß Tabelle 4 eingesetzt. Die Reaktionszeit betrug 60 min.

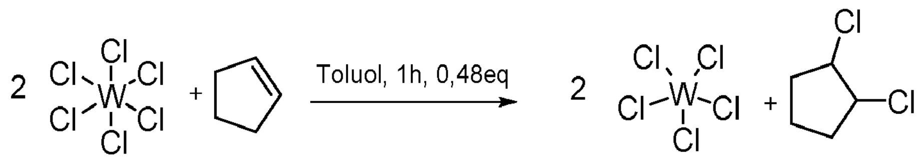


Tabelle 4: Chemikalien und Stoffmengen gemäß Beispiel 3

| Chemikalie | Einwaage (g) | Volumen (mL) | Stoffmenge (mmol) | Äquivalente (eq) |
|---|---|---|---|---|
| $WCl_6$ | 15,432 | - | 38,909 | 1,00 |
| Cyclopentan | 1,272 | - | 18,477 | 0,48 |
| Toluol | - | 100 | - | - |

Beispiel 4

Wolframhexachlorid wurde gemäß der Reaktionsgleichung unten mit 2-Penten zu Wolframpentachlorid reduziert. Die Reaktion erfolgte wie in Beispiel 1 beschrieben mit folgenden Abwandlungen: Die Stoffmengen wurden gemäß Tabelle 5 eingesetzt. Die Reaktionszeit betrug 60 min.

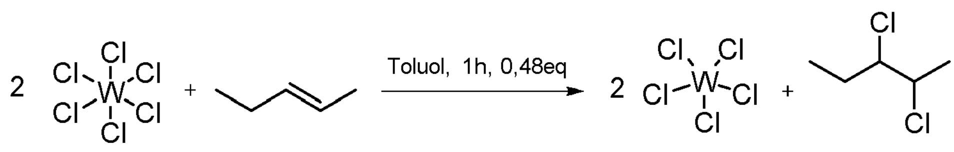


Tabelle 5: Chemikalien und Stoffmengen gemäß Beispiel 4

| Chemikalie | Einwaage (g) | Volumen (mL) | Stoffmenge (mmol) | Äquivalente (eq) |
|---|---|---|---|---|
| $WCl_6$ | 14,706 | - | 37,079 | 1,00 |
| 2-Penten | 1,248 | - | 17,798 | 0,48 |
| Toluol | - | 100 | - | - |

Beispiel 5

Wolframhexachlorid wurde gemäß der Reaktionsgleichung unten mit 1-Hexen zu Wolframpentachlorid reduziert. Die Reaktion erfolgte wie in Beispiel 1 beschrieben mit folgenden Abwandlungen: Die Stoffmengen wurden gemäß Tabelle 6 eingesetzt. Die Reaktionszeit betrug 20 h.

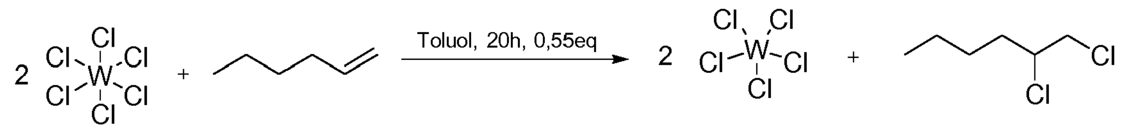


Tabelle 6: Chemikalien und Stoffmengen gemäß Beispiel 5

| Chemikalie | Einwaage (g) | Volumen (mL) | Stoffmenge (mmol) | Äquivalente (eq) |
|---|---|---|---|---|
| $WCl_6$ | 10,377 | - | 26,168 | 1,00 |
| 1-Hexen | 1,211 | - | 14,392 | 0,55 |
| Toluol | - | 100 | - | - |

Ergebnisse:

Die Ausbeuten an Wolframpentachlorid vor und nach der Sublimation sind in Tabelle 7 zusammengefasst.

Tabelle 7: Übersicht der Ausbeuten an Wolframpentachlorid

| Bsp. | Bedingungen | Gesamtausbeute Rohprodukt nach Fällung (%) | Ausbeute Sublimat (%) | Rückstand Sublimation (%) |
|---|---|---|---|---|
| 1 | 2-Penten, 0,55eq, 24h | 56,58 | -* | -* |
| 2 | 2-Penten, 2,00eq, 0,5h | 55,54 | -* | -* |
| 3 | Cyclopenten, 0,48eq, 1 h | 90,24 | 18,85 | 71,21 |
| 4 | 2-Penten, 0,48eq, 1 h | 81,16 | 93,40 | 0,70 |
| 5 | 1-Hexen, 0,55eq, 20h | 65,31 | 91,68 | 3,86 |

*Reaktion im kleinen Maßstab, daher wurde vorerst keine Sublimation durchgeführt.
Die fehlenden Prozente aus der Addition von "Sublimat-Ausbeute" und "Rückstand" sind möglicherweise Lösungsmittelreste, die beim Trocknen des Rohproduktes nicht entfernt wurden und Verluste beim Abkratzen des Sublimates aus dem Sublimationsrohr.

Die Ergebnisse zeigen, dass in der Reduktionsreaktion bereits nach relativ kurzer Zeit das gewünschte Produkt in relativ hoher Ausbeute erhalten werden kann. Das gewünschte Produkt kann durch Sublimation aus dem Reaktionsprodukt abgetrennt werden. Dabei kann die Sublimation nahezu rückstandslos erfolgen. Eine Überreduktion findet bei Einsatz ungefähr äquivalenter Mengen fast nicht statt.

Einmal sublimiertes Produkt sublimiert bei einer zweiten Sublimation unter Vakuum vollständig, was bedeutet, dass unter Vakuum bei hohen Temperaturen (bis mind. 160°C) keine Zersetzung stattfindet. Bei Messungen des thermischen Abbaus unter Normaldruck (Stickstoffatmosphäre, TGA-Messung) kann bei unterschiedlichen Aufheizraten (="Verweilzeiten") ein Abbau detektiert werden. Dies ist anhand des Masseverlusts bei der TGA-Messung ersichtlich. Eine Erhöhung der Heizrate bei der TGA-Messung begünstigt den vollständigen Masseverlust des Produkts.

**Patentansprüche**

1. Verfahren zur Herstellung einer Verbindung der Formel $MX_n$ aus einer Vorläuferverbindung der Formel $MX_m$, wobei

   M ein Metall ist,
   X ein Halogenid ist, ausgewählt ist aus F, Cl, Br und I,
   m ausgewählt ist aus einer Zahl von 2 bis 8, und
   n ausgewählt ist aus einer Zahl von 1 bis 7, mit der Maßgabe, dass $n < m$ ist, umfassend einen Verfahrensschritt, bei dem die Vorläuferverbindung mit einem Alken zu der Verbindung der Formel $MX_n$ reduziert wird,

   wobei nach der Reduktion das Metallhalogenid der Formel $MX_n$ durch Sublimation gereinigt wird.

2. Verfahren gemäß Anspruch 1, wobei $m - n = 1$ oder 2 ist, und/oder wobei $m = 4$, 5 oder 6 und $n = 3$, 4 oder 5 ist.

3. Verfahren gemäß mindestens einem der vorhergehenden Ansprüche, wobei das Metall M ausgewählt ist aus einem Übergangsmetall, einem Lanthanoid, einem Actinoid, In, Tl, Sn, Pb, Sb und Bi.

4. Verfahren gemäß mindestens einem der vorhergehenden Ansprüche, wobei X = Cl ist.

5. Verfahren gemäß mindestens einem der vorhergehenden Ansprüche zur Herstellung von $WCl_5$ aus $WCl_6$.

6. Verfahren gemäß mindestens einem der vorhergehenden Ansprüche, wobei das Alken ein Penten ist.

7. Verfahren gemäß Anspruch 6, wobei das Penten 2-Penten oder Cyclopenten ist.

8. Verfahren gemäß mindestens einem der vorhergehenden Ansprüche, wobei das Verhältnis A: B der molaren Ausgangsmenge A der Vorläuferverbindung und B des Alkens so ausgewählt ist, dass es um nicht mehr als 50% von dem idealen molaren Verhältnis für die Redoxreaktion abweicht.

9. Verfahren gemäß mindestens einem der vorhergehenden Ansprüche, wobei $m - n = 1$ ist, und wobei die Ausgangsstoffe in einem molaren Verhältnis von 2,4 : 1 bis 1,6 : 1 eingesetzt werden, insbesondere von 2,2 : 1 und 1,8 : 1.

10. Verfahren gemäß mindestens einem der vorhergehenden Ansprüche, wobei die Reduktion über einen Zeitraum von weniger als 2 h oder weniger als 90 min durchgeführt wird.

11. Verfahren zur Herstellung von $WCl_5$ aus $WCl_6$, umfassend einen Verfahrensschritt, bei dem $WCl_6$ mit einem linearen Penten, bevorzugt 2-Penten, zu $WCl_5$ reduziert wird, wobei nach der Reduktion das $WCl_5$ durch Sublimation gereinigt wird, wobei die Ausgangsstoffe in einem molaren Verhältnis von 2,2 : 1 und 1,8 : 1 eingesetzt werden, wobei die Reduktion über einen Zeitraum von weniger als 2 h durchgeführt wird.

12. Verfahren gemäß mindestens einem der vorhergehenden Ansprüche, wobei die Reduktion in einem Lösungsmittel durchgeführt wird, das aromatische Kohlenwasserstoffe aufweist, wobei das Lösungsmittel bevorzugt Toluol ist.

13. Verfahren gemäß mindestens einem der vorhergehenden Ansprüche, wobei das Metallhalogenid der Formel $MX_n$ nach der Sublimation in einer Ausbeute von >90% erhalten wird, bezogen auf die eingesetzte molare Menge der Vorläuferverbindung.

14. Zusammensetzung, welche die Verbindung der Formel $MX_n$ in einer Reinheit >99,5 Gew.%, bevorzugt >99,9 Gew.% enthält, erhältlich durch ein Verfahren gemäß mindestens einem der vorhergehenden Ansprüche.

Europäisches Patentamt
European Patent Office
Office européen des brevets

# EUROPÄISCHER RECHERCHENBERICHT

Nummer der Anmeldung
EP 17 18 5151

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| Y | HAYATO TSURUGI ET AL: "Salt-Free Reducing Reagent of Bis(trimethylsilyl)cyclohexadiene Mediates Multielectron Reduction of Chloride Complexes of W(VI) and W(IV)", JOURNAL OF THE AMERICAN CHEMICAL SOCIETY, Bd. 135, Nr. 16, 15. April 2013 (2013-04-15), Seiten 5986-5989, XP55439941, US ISSN: 0002-7863, DOI: 10.1021/ja401589a * Seite 5987; Abbildung 1 * ----- | 1-14 | INV. C01G41/04 |
| Y | CHRISTINA PERSSON ET AL: "Reduction of tungsten(VI) and molybdenum(V) by allyltrimethylsilane and cyclopentene. Simple high yield syntheses of MoCl4(OEt2)2, MoCl4(dme), WCl4(thf)2, WCl4(dme) and WOCl3(thf)2", INORGANICA CHIMICA ACTA, Bd. 203, Nr. 2, 1. Januar 1993 (1993-01-01), Seiten 235-238, XP55439954, NL ISSN: 0020-1693, DOI: 10.1016/S0020-1693(00)81663-1 * Seite 235, Spalte 2 - Seite 236, Spalte 2, Absatz 1 * ----- | 1-14 | RECHERCHIERTE SACHGEBIETE (IPC) C01G |

-/--

Der vorliegende Recherchenbericht wurde für alle Patentansprüche erstellt

2

| Recherchenort | Abschlußdatum der Recherche | Prüfer |
|---|---|---|
| München | 17. Januar 2018 | Timmermans, Michel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

Seite 1 von 2

Europäisches Patentamt
European Patent Office
Office européen des brevets

# EUROPÄISCHER RECHERCHENBERICHT

Nummer der Anmeldung
EP 17 18 5151

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| Y | ROCÍO ARTEAGA-MÜLLER ET AL: "New Tantalum Ligand-Free Catalyst System for Highly Selective Trimerization of Ethylene Affording 1-Hexene: New Evidence of a Metallacycle Mechanism", JOURNAL OF THE AMERICAN CHEMICAL SOCIETY, Bd. 131, Nr. 15, 22. April 2009 (2009-04-22), Seiten 5370-5371, XP55439956, US ISSN: 0002-7863, DOI: 10.1021/ja8100837 * Seite 5370, Spalte 2; Abbildung 1 * ----- | 1-14 | |
| Y | TSURUGI HAYATO ET AL: "Carbon Radical Generation by d0 Tantalum Complexes with .alpha.-Diimine Ligands through Ligand-Centered Redox Processes", JOURNAL OF THE AMERICAN CHEMICAL SOCIETY, AMERICAN CHEMICAL SOCIETY, US, Bd. 133, Nr. 46, 23. November 2011 (2011-11-23), Seiten 18673-18683, XP008165886, ISSN: 0002-7863, DOI: 10.1021/JA204665S [gefunden am 2011-10-07] * Seite 18676; Abbildung 1 * ----- | 1-14 | RECHERCHIERTE SACHGEBIETE (IPC) |

Der vorliegende Recherchenbericht wurde für alle Patentansprüche erstellt

2

| Recherchenort | Abschlußdatum der Recherche | Prüfer |
|---|---|---|
| München | 17. Januar 2018 | Timmermans, Michel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

Seite 2 von 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **MCCANN et al.** Inorganic Synthesis. McGraw-Hill, Inc, 1972, vol. XIII
- **THORN-CSANYI et al.** *Journal of Molecular Catalysis, Nr.,* 1991, vol. 65, 261-267
- **THORN-CSANYI et al.** *Journal of Molecular Catalysis,* 1985, 37-48
- *JOURNAL OF MOLECULAR CATALYSIS,* 1986, 31-38